# EUROPEAN PATENT APPLICATION

(11) **EP 4 401 180 A1**
(43) Date of publication of application: **17.07.2024**
(21) Application number: 23209718.8
(22) Date of filing: 14.11.2023
(51) Int. Cl.: H01M 10/04, H01M 10/613, H01M 10/647, H01M 10/6554, H01M 10/6556, H01M 10/6567, H01M 50/204

(54) **BATTERY MODULE AND BATTERY PACK INCLUDING THE SAME**

(30) Priority: 07.12.2022 KR 20220169297
(71) Applicant: SK On Co., Ltd., Seoul 03161 (KR)
(72) Inventor: LEE, Seung Hun, 34124 Daejeon (KR)
(74) Representative: Prüfer & Partner mbB Patentanwälte · Rechtsanwälte

(57) **Abstract**

A battery module is disposed. The battery module may include: a plurality of battery cells stacked in one direction; an end plate disposed outermost in a direction in which the plurality of battery cells are stacked; and an upper cooling plate and a lower cooling plate including a cooling flow path through which cooling water for cooling the plurality of battery cells flows, and respectively disposed above and below the plurality of battery cells, wherein the end plate may include a flow path connection portion connecting the upper cooling plate and the lower cooling plate so that the cooling water moves between the upper cooling plate and the lower cooling plate.

## Description

### TECHNICAL FIELD

The technology and implementations disclosed in this patent document generally relate to a battery module and a battery pack including the same.

### BACKGROUND

Secondary batteries can charge and discharge repeatedly because of the reversible mutual conversion between chemical energy and electrical energy.

Secondary batteries may be used as an energy source for electric vehicles, hybrid vehicles, energy storage systems (ESSs), and mobile devices.

### SUMMARY

An aspect of the disclosed technology is to provide a battery module having improved cooling performance and efficiency and a battery pack including the same.

An aspect of the disclosed technology is to provide a battery pack preventing or delaying propagation of heat between battery modules.

In an aspect of the disclosed technology, a battery module, may include: a plurality of battery cells arranged in a row one direction; an end plate disposed adjacent to an outermost battery cell of the plurality of battery cells; and an upper cooling plate and a lower cooling plate disposed above and below the plurality of battery cells, respectively, and structured to include a first cooling flow path and a second cooling flow path , respectively, for a coolant for cooling the plurality of battery cells to flow, wherein the end plate may include a flow path connection portion connected between the upper cooling plate and the lower cooling plate for the coolant to flow between the first cooling flow path and the second cooling flow path.

In an embodiment of the disclosed technology, the battery module, may further include: an inlet connected to at least one of the first cooling flow path, the second cooling flow path, or the at least one flow path connection portion to supply the coolant into the first and second cooling flow paths and the at least one flow path connection portion, and an outlet to at least one of the first cooling flow path, the second cooling flow path, or the at least one flow path connection portion to discharge the coolant from the first and second cooling flow paths and the at least one flow path connection portion.

In an aspect of the disclosed technology, the inlet and the outlet may be disposed on at least one of the upper cooling plate and the lower cooling plate.

In an aspect of the disclosed technology, the flow path connection portion may include a pair of flow path connection portions disposed to be spaced apart from each other the one direction of the plurality of battery cells.

In an aspect of the disclosed technology, the upper cooling plate or the lower cooling plate including the inlet and the outlet may include a first portion including a cooling flow path connected to the inlet, and a second portion including a cooling flow path connected to the outlet, wherein the first portion and the second portion may be separated and spaced apart from each other on the upper cooling plate or the lower cooling plate.

In an aspect of the disclosed technology, the second portion may have an area at least the same as or greater than that of the first portion.

In an aspect of the disclosed technology, one of the first cooling flow path or the second cooling flow path may not include the inlet and the outlet, wherein all parts of the one of the first cooling flow path or the second cooling flow path may be coupled to each other.

In an aspect of the disclosed technology, wherein the pair of flow path connection portions may include a first flow path connection portion and a second flow path connection portion, wherein the first flow path connection portion may be structured to allow the coolant to flow from the upper cooling plate to the lower cooling plate, and the second flow path connection portion may be structured to allow the coolant to flow from the lower cooling plate to the upper cooling plate.

In an aspect of the disclosed technology, the battery module, may further include: a heat dissipation member disposed between the plurality of battery cells and the upper cooling plate and the lower cooling plate may be further included.

In an aspect of the disclosed technology, the plurality of battery cells may include prismatic battery cells each of which includes an electrode terminals on both sides of each of the plurality of battery cells.

In an aspect of the disclosed technology, a battery pack, may include: a plurality of battery modules of any one of described above; a pack housing structured to accommodate the battery module; and a pack cover coupled to the pack housing to cover the battery module.

In an aspect of the disclosed technology, the inlet and the outlet may be exposed externally through the pack cover, and may further include a pipe joint coupled to the inlet and the outlet exposed through the pack cover, wherein the battery pack, may further include: a pipe joint coupled to the inlet and the outlet exposed through the pack cover.

In an aspect of the disclosed technology, the inlet and the outlet may be arranged on one side of the battery module, wherein the plurality of battery modules may be accommodated in the pack housing, and the inlet and the outlet may be disposed close to each other between battery modules.

In an aspect of the disclosed technology, wherein a side surface of the battery module may be spaced apart from the pack housing, and an air gap may be formed between the battery module and the pack housing.

In an aspect of the disclosed technology, the battery pack, may further include: a heat insulation member disposed on at least one of a space between the battery module and the pack housing or a space between the battery module and the pack cover may be further included.

### BRIEF DESCRIPTION OF DRAWINGS

FIG. 1 illustrates a cooling structure of an example battery pack.
FIG. 2 illustrates an example cooling plate of FIG. 1.
FIG. 3 is a schematic perspective view of a battery module based on an embodiment of the disclosed technology.
FIG. 4 is an example side view of the battery module of FIG. 3.
FIG. 5 is another example side view of the battery module of FIG. 3.
FIGS. 6 illustrates an example configuration of cooling flow paths of upper and lower cooling plates based on some embodiments of the disclosed technology.
FIG. 7 illustrates another example configuration of cooling flow paths of upper and lower cooling plates based on some embodiments of the disclosed technology.
FIG. 8 illustrates another example configuration of cooling flow paths of upper and lower cooling plates based on some embodiments of the disclosed technology.
FIG. 9 illustrates another example configuration of cooling flow paths of upper and lower cooling plates based on some embodiments of the disclosed technology.
FIG. 10 is a schematic diagram of a battery pack based on an embodiment of the disclosed technology.
FIG. 11 illustrates the battery pack of FIG. 10 viewed from above.
FIG. 12 is a schematic diagram of a battery pack based on another embodiment of the disclosed technology.
FIG. 13 is a conceptual diagram illustrating a heat blocking effect of the battery pack of FIG. 12.

### DETAILED DESCRIPTION

Secondary batteries are widely used in various applications in part because they can be recharged and may be configured in various configurations with battery cells in various forms such as flexible pouch-type battery cells, or prismatic or cylindrical can-type rigid battery cells. Those battery cells are electrically connected in ways to provide desired electrical power output. Electric vehicles requiring high power may use a battery module that includes one or more cell stacks, each of which includes a plurality of battery cells stacked and electrically connected, or may use a battery pack that includes one or more battery modules that are electrically connected.

The performance of secondary batteries may be affected by temperature. In particular, when the temperature of secondary batteries is higher than a proper temperature, the performance of secondary batteries is degraded, and in severe cases, the increase in the temperature of secondary batteries may lead to explosion and ignition. Battery modules including a plurality of battery cells or battery packs including a plurality of battery modules may increase the risk of explosion and ignition. The disclosed technology can be implemented in some embodiments to provide battery module and battery pack structures that can control heat generated in the battery cells.

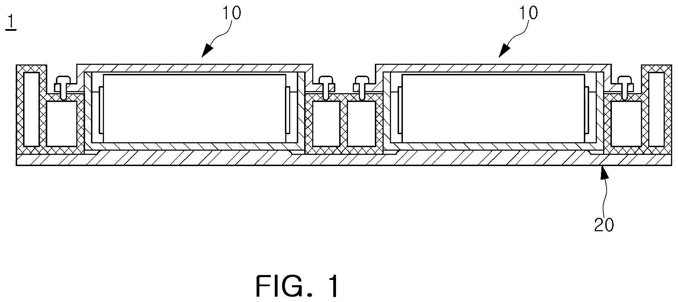

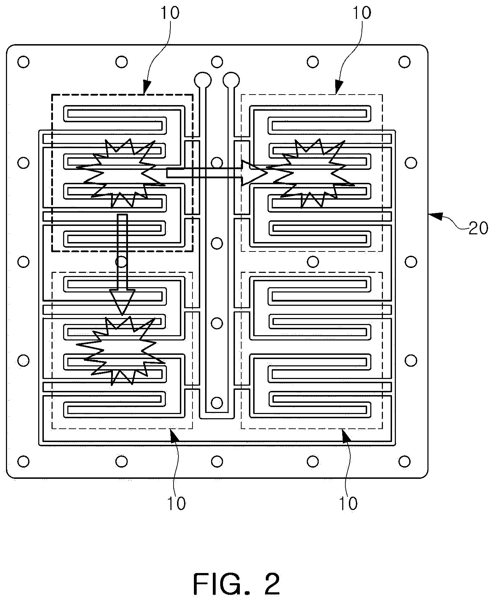

FIG. 1 illustrates a cooling structure of an example battery pack, and FIG. 2 illustrates an example cooling plate of FIG. 1.

Referring to FIG. 1, in an example battery pack 1, a plurality of battery modules 10 can be cooled by using a cooling plate 20 disposed below the plurality of battery modules 10 constituting the battery pack 1. However, this structure may have limitations in improving cooling performance and efficiency because cooling is performed only on one side of the battery module 10. In addition, as shown in FIG. 2, since the plurality of battery modules 10 shares the cooling plate 20, heat transfer between adjacent modules may cause thermal runaway.

The disclosed technology can be implemented in some embodiments to provide a battery module 100 and a battery pack 1000 including the battery module 100 to perform cooling is performed on both surfaces of the battery module 100 and/or the battery pack 1000.

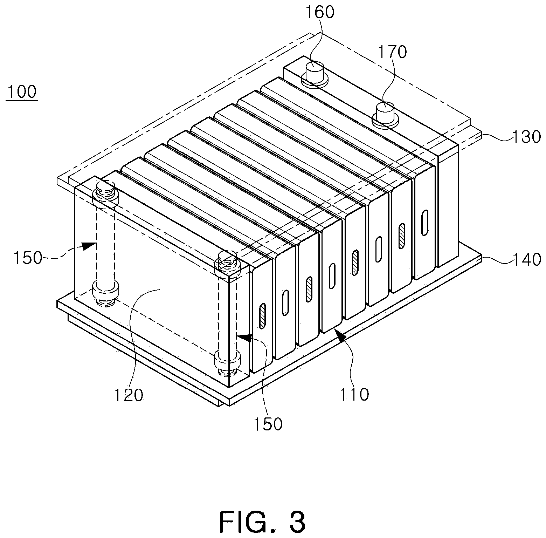

The disclosed technology can be implemented in some embodiments to provide a battery module as will be described with reference to FIGS. 3 to 9.

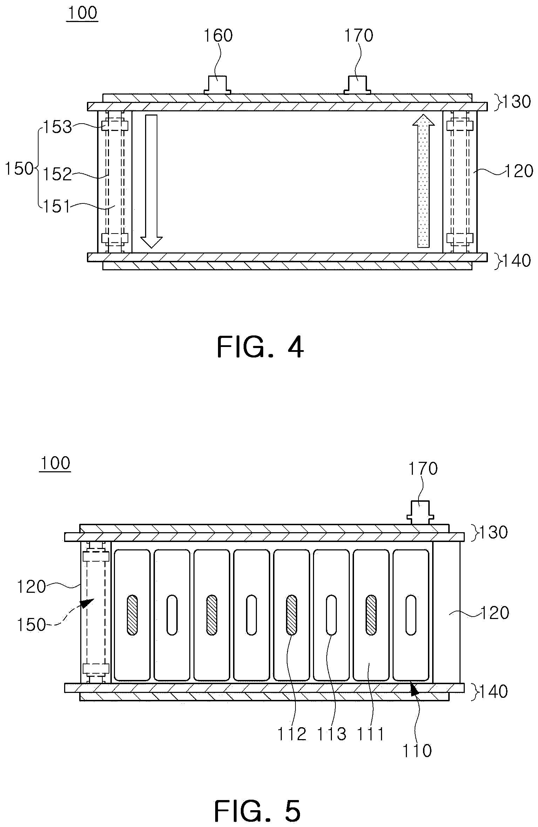

FIG. 3 is a schematic perspective view of a battery module based on an embodiment of the disclosed technology. FIGS. 4 and 5 are example side views of the battery module of FIG. 3.

In some implementations, a battery module 100 based on an embodiment of the disclosed technology may include a plurality of battery cells 110 and a plurality of cooling plates 130 and 140 configured to cool the plurality of battery cells 110.

In an embodiment of the disclosed technology, the plurality of battery cells 110 may be prismatic battery cells. In some implementations, the prismatic battery cell may include a case 111 structured to accommodate an electrode assembly and an electrolyte. In one example, the case 111 may have a flat and angular shape. In some implementations, the case 111 of the prismatic battery cell may include an aluminum material.

In an embodiment of the disclosed technology, the plurality of battery cells 110 may have a shape in which electrode terminals protrude on both sides in a longitudinal direction. For example, a positive terminal 112 may be formed to protrude on one side of the plurality of battery cells 110 in the longitudinal direction, and a negative terminal 113 may be formed to protrude on the other side of the plurality of battery cells 110. The plurality of battery cells 110 may be electrically connected to the outside through electrode terminals.

In an embodiment of the disclosed technology, the plurality of battery cells 110 may be arranged in a row in one direction. In an implementation, the plurality of battery cells 110 may be stacked in one direction. For example, the plurality of battery cells 110 may be arranged or stacked such that a wide surface of the case 111 face each other. In one example, the plurality of battery cells 110 may be arranged or stacked such that positive terminals and negative terminals are alternately disposed in a stacking direction as shown in FIG. 3.

In some implementation, a compression member (not shown) may be disposed between the plurality of battery cells 110 to fill a gap between the plurality of battery cells 110. For example, the compression member may be formed of a polyurethane material.

The battery module 100 based on an embodiment of the disclosed technology may include an end plate 120 disposed on an outermost side of the plurality of battery cells 110 in a stacking direction. The end plate 120 may be disposed on both sides of the plurality of battery cells 110 in the stacking direction. The end plate 120 may fix and support the plurality of battery cells 110 in the stacking direction of the plurality of battery cells 110.

Since the end plate 120 forms an exterior of the battery module 100, the end plate 120 should have structural rigidity, and at the same time, the end plate 120 should be able to prevent electrical short circuits caused by contact with the plurality of battery cells 110 and to absorb shocks. For example, the end plate 120 may include a metal material and an insulating material, and a portion of the metal material and a portion of the insulating material may be integrally formed or separately formed.

In some implementations, although not illustrated in the drawings, a side plate (not shown) may be disposed on both sides of the plurality of battery cells 110 in a longitudinal direction, respectively.

The battery module 100 based on an embodiment of the disclosed technology may include a plurality of cooling plates 130 and 140 cooling the plurality of battery cells 110. In an embodiment of the disclosed technology, the plurality of cooling plates 130 and 140 may be respectively disposed above and below the plurality of battery cells 110, and thus, cooling (e.g., thermal management) may be performed on both surfaces of the plurality of battery cells 110. The plurality of cooling plates 130 and 140 may be formed of a metal material having high thermal conductivity. For example, the plurality of cooling plates 130 and 140 may be formed of an aluminum or stainless steel material. In some implementations, a cooling plate disposed above the plurality of battery cells 110 is referred to as an upper cooling plate 130, and a cooling plate disposed below the plurality of battery cells 110 is referred to as a lower cooling plate 140.

In an embodiment of the disclosed technology, the upper cooling plate 130 and the lower cooling plate 140 may be disposed to cover upper and lower portions of the plurality of battery cells 110, respectively. In some implementations, the upper cooling plate 130 and the lower cooling plate 140 may directly face the upper and lower portions of the plurality of battery cells 110, respectively. In one example, a heat dissipation member (not shown) may be additionally disposed between the plurality of battery cells 110 and the upper cooling plate 130 and the lower cooling plate 140. For example, the heat dissipation member may be provided with a thermal pad or thermal paste. The heat dissipation member may contribute to improving cooling performance and efficiency of the battery module 100 by filling a minute gap that may exist between the plurality of battery cells 110 and the upper cooling plate 130 and the lower cooling plate 140.

The upper cooling plate 130 and the lower cooling plate 140 may include a cooling flow path (hereinafter, an upper cooling flow path 131 and a lower cooling flow path 141) through which a coolant such as cooling water for cooling the plurality of battery cells 110, flows. The upper cooling flow path 131 and the lower cooling flow path 141 may be formed on a whole surface of the upper cooling plate 130 and the lower cooling plate 140 so that heat exchange can be sufficiently performed on both surfaces of the plurality of battery cells 110.

In an embodiment of the disclosed technology, the upper cooling flow path 131 and the lower cooling flow path 141 may be connected to each other. To this end, the battery module 100 based on an embodiment of the disclosed technology may include a flow path connection portion 150 connecting the upper cooling flow path 131 and the lower cooling flow path 141.

In an embodiment, the flow path connection portion 150 may be disposed on the end plate 120. The flow path connection portion 150 may extend in a height direction of the end plate 120, so that one side of the flow path connection portion 150 may be connected to the upper cooling plate 130, and the other side thereof may be connected to the lower cooling plate 140. In some implementations, the flow path connection portion 150 may include a connection pipe 151, one side of the connection pipe 151 may communicate with the upper cooling passage 131 and the other side communicate with the lower cooling flow path 141, so that cooling water may flow from the cooling plate 130 to the lower cooling plate 140 and/or vice versa.

In addition, in some implementations, the flow path connection portion 150 may further include a rubber hose 152 surrounding the connection pipe 151 and a clamp 153 fixing the rubber hose 152. The rubber horse 152 may be provided to surround substantially an entirety of the connection pipe 151, and the clamp 153 may be inserted into both ends of the rubber hose 152 to fix the rubber hose 152 to the connection pipe 151.

In an embodiment of the disclosed technology, a pair of flow path connection portions 150 may be provided. In other words, the battery module 100 based on an embodiment of the disclosed technology may include a pair of flow path connection portions 150. The pair of flow path connection portions 150 may be disposed to be spaced apart from each other in a longitudinal direction of the plurality of battery cells 110. In some implementations, the pair of flow path connection portions 150 may be disposed to be spaced apart from the outside of the end plate 120 in the longitudinal direction of the plurality of battery cells 110 on the outside of the end plate 120 in a stacking direction of the plurality of battery cells 110.

In an embodiment of the disclosed technology, the pair of flow path connection portions 150 may be disposed to provide a flow of coolant such as cooling water from a direction of the upper cooling plate 130 to a direction of the lower cooling plate 140 and/or in an opposite direction thereof. Therefore, as will be described later, in an embodiment in which the upper cooling plate 130 and the lower cooling plate 140 include any one of the inlet 160 and the outlet 170, respectively, the flow path connection portions 150 are not necessarily provided in a pair.

The battery module 100 based on an embodiment of the disclosed technology may include an inlet 160 supplying cooling water to the upper cooling plate 130 or the lower cooling plate 140, and an outlet 170 discharging cooling water externally of the battery module 100. That is, the inlet 160 and the outlet 170 may communicate with cooling flow paths 131 and 141 of the cooling plates 130 and 140.

In an embodiment, the inlet 160 and the outlet 170 may be disposed together on the upper cooling plate 130 or the lower cooling plate 140. In the drawings, it is illustrated that the inlet 160 and the outlet 170 are disposed on the upper cooling plate 130, but as described above, the inlet 160 and the outlet 170 may be disposed on the lower cooling plate 140 instead of the upper cooling plate 130. In addition, in another embodiment, the inlet 160 and the outlet 170 may be separately disposed on the upper cooling plate 130 and the lower cooling plate 140. That is, the inlet 160 may be disposed on the upper cooling plate 130 and the outlet 170 may be disposed on the lower cooling plate 140. Conversely, in some implementations, the inlet 160 may be disposed on the lower cooling plate 140 and the outlet 170 may be disposed on the upper cooling plate 130.

In some embodiments of the disclosed technology, the battery module 100 may include an inlet 160 and an outlet 170, and a position in which the inlet 160 and the outlet 170 are disposed is not particularly limited. However, by way of example only, an embodiment in which both the inlet 160 and the outlet 170 are in the upper cooling plate 130 will be explained.

In an embodiment of the disclosed technology, the inlet 160 and the outlet 170 may be disposed to be spaced apart from the pair of flow path connection portions 150 in a direction in which the plurality of battery cells 110 are arranged or stacked. Furthermore, cooling flow paths131 and 141 may be formed between the inlet 160 and the outlet 170 and the pair of passage connection portions 150.

In an embodiment of the disclosed technology, a coolant such as cooling water may flow into an upper cooling flow path 131 through the inlet 160, may pass through a lower cooling flow path 141, and may be discharged externally through the outlet 170 connected to the upper cooling flow path 131. Cooling water may flow between the upper cooling flow path 131 and the lower cooling flow path 141 by the flow path connection portion 150.

The cooling water may flow in one direction along the cooling flow path 131 and 141 formed in the cooling plates 130 and 140. The cooling flow paths 131 and 141 may be continuously formed between the inlet 160 and the outlet 170, and the upper cooling flow path and the lower cooling flow path 141 may communicate with each other through a connection pipe 151. For example, in an embodiment in which the inlet 160 and the outlet 170 are both disposed on the upper cooling plate 130, the cooling water flowing into the inlet 160 may flow from the upper cooling flow path 131 to the lower cooling flow path 141 through one of a pair of flow path connection portions 150, and may flow from the lower cooling flow path 141 to the upper cooling flow path 131 through the other thereof and may be discharged through the outlet 170.

In order to provide a path through which a coolant such as cooling water flows described above, the upper cooling flow path 131 may include a first portion 131a and a second portion 131b that are separated or not connected to each other on the upper cooling plate 130. For example, the cooling water cannot directly flow from the first portion 131a to the second portion 131b, and can flow into the second portion 131b only through a lower cooling flow path 141. The lower cooling flow path 141 may be continuously formed on the lower cooling plate 140.

In an embodiment of the disclosed technology, one side of the first portion 131a may be connected to the inlet 160 and the other side may be connected to the flow path connection portion 150, and one side of the second portion 131b may be connected to the outlet 170, and the other side thereof may be connected to the is connected to and the other side may be connected to the flow path connection portion 150. In this case, the first portion 131a and the second portion 131b may be connected to different flow path connection portions 150. Also, one side and the other side of the lower cooling flow path 141 may be connected to a pair of flow path connection portions 150.

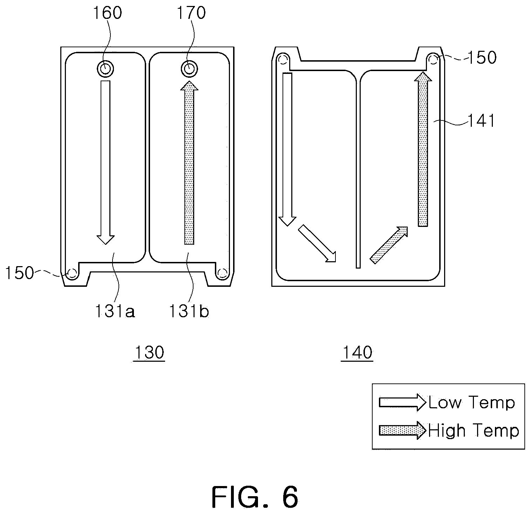

FIGS. 6 to 9 illustrate example configurations of cooling flow paths of upper and lower cooling plates based on various embodiments of the disclosed technology.

Referring to FIGS. 6 to 9, an upper cooling flow path 131 and a lower cooling flow path 141 may be provided in various forms in an upper cooling plate 130 and a lower cooling plate 140.

Referring to FIG. 6, a first portion 131a and a second portion 131b of the upper cooling flow path 131 may have the same or substantially the same area. A coolant such as cooling water may cool the plurality of battery cells 110 while flowing along the first portion 131a of the upper cooling flow path 131. In an embodiment, referring to FIG. 6, the cooling water flowing into the inlet 160 may cool a side of upper surfaces of the plurality of battery cells 110 and then moved to the lower cooling plate 140, and such a cooling operation may be evenly performed on the upper and lower surfaces of the battery cells 110.

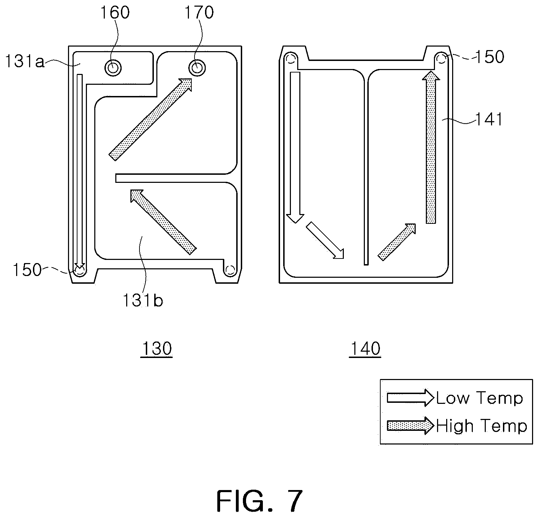

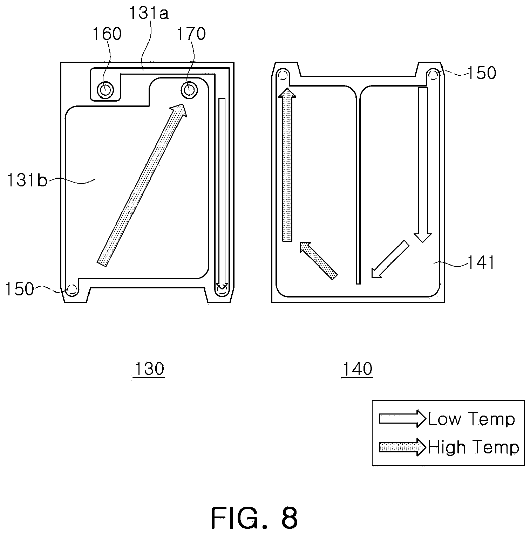

Referring to FIGS. 7 and 8, the upper cooling flow path 131 may be mainly provided in the second portion 131b. In the embodiments of FIGS. 7 and 8, the coolant such as cooling water flowing into the inlet 160 may directly flow to the lower cooling flow path 141 through the flow path connection portion 150 without exchanging heat with the plurality of battery cells 110. In an embodiment, cooling may be mainly performed in lower portions of the plurality of battery cells 110. However, as shown in FIG. 8, when the first portion 131a is provided so that cooling water faces the flow path connection portion 150 disposed in a direction that is diagonal to the inlet 160, the cooling water may flow through the shortest path in the second portion 131b.

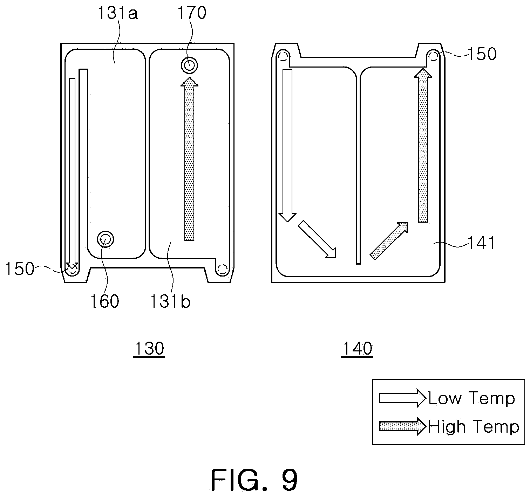

Different from FIG. 6, FIG. 9 illustrates an example configuration of a cooling flow path in a case in which the inlet 160 and the outlet 170 are disposed diagonally on the upper cooling plate 130.

In some implementations, a temperature of the coolant such as cooling water may increase in a process of flowing through cooling flow paths 131 and 141 and exchanging heat with the plurality of battery cells 110. Accordingly, the temperature of the coolant (e.g., cooling water) discharged through the outlet 170 may be higher than the temperature of the coolant (e.g., cooling water) flowing into the inlet 160.

In an embodiment of the disclosed technology, the inlet 160 and the outlets170 may be formed to protrude from the upper cooling plate 130 and/or the lower cooling plate 140 in a height direction of the plurality of battery cells 110. Furthermore, the inlet 160 and the outlet 170 may be exposed through a pack cover 1040 of a battery pack 1000, as will be discussed below, and a pipe joint 1180 may be coupled to the inlet 160 and the outlet 170.

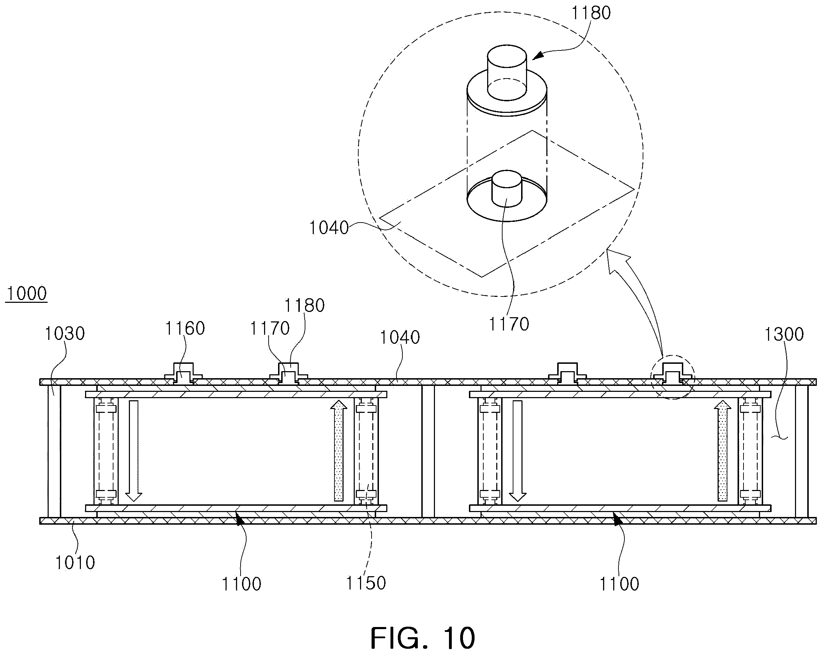

The disclosed technology can be implemented in some embodiments to provide a battery pack as will be discussed below with reference to FIGS. 10 to 13.

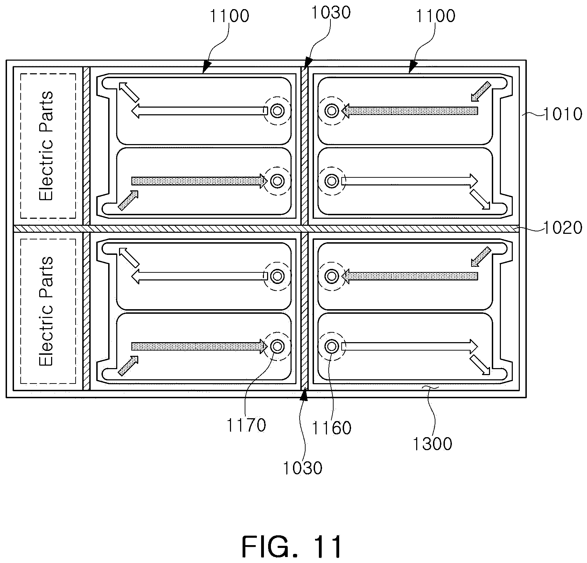

FIG. 10 is a schematic diagram of a battery pack based on an embodiment of the disclosed technology FIG. 11 illustrates the battery pack of FIG. 10 viewed from above.

Referring to the drawings, a battery pack 1000 based on an embodiment of the disclosed technology may include a plurality of battery modules 1100 based on an embodiment of the disclosed technology described above.

A plurality of battery modules 1100 based on an embodiment of the disclosed technology may be accommodated in a pack housing 1010. In detail, the plurality of battery modules 1100 may be accommodated in an internal space provided in the pack housing 1010. Referring to FIG. 11, the internal space of the pack housing 1010 may be divided into a plurality of spaces by a center beam 1020 extending in a longitudinal direction of the pack housing 1010 and a cross beam 1030 extending in a width direction of the pack housing 1010, and the plurality of battery modules 1100 may be disposed in the plurality of partitioned spaces, respectively. In addition, a space in which electric parts are disposed may be separately provided on one side of the pack housing 1010.

In an embodiment of the disclosed technology, as described above, the internal space of the pack housing 1010 may be partitioned into a plurality of spaces in a longitudinal direction and a width direction thereof by the center beam 1020 and the cross beam 1030, and the plurality of battery modules 1100 may be respectively disposed in a plurality of partitioned spaces. In this case, a gap may be formed between the plurality of battery modules 1100 and the center beam 1020 and the cross beam 1030 respectively disposed in the plurality of partitioned spaces. In other words, the plurality of battery modules 1100 may be disposed to be spaced apart from the center beam 1020 and the cross beam 1030, and accordingly, an air gap may be formed between the plurality of battery modules 1100 and the center beam 1020 and the cross beam 1030. The air gap may confine heat generated from the battery module 1100 in a partitioned space where the battery module 1100 is disposed and delay propagation of heat to adjacent battery modules 1100.

In addition, in an embodiment of the disclosed technology, the plurality of battery modules 1100 may be disposed so that an inlet 1160 and an outlet 1170 provided in each of the battery modules 1100 are placed on a side of the cross beam 1030 side, as will be discussed below.

In an embodiment of the disclosure, a pack cover 1040 may be disposed on an upper side of the pack housing 1010 to cover an internal space. The pack cover 1040 may seal the internal space to protect various parts disposed in the internal space including a plurality of battery modules 1100.

In an embodiment of the disclosed technology, the inlet 1160 and outlet 1170 of the battery module 1100 may be exposed externally of the pack cover 1040. For example, the pack cover 1040 may include a plurality of holes 1041, and one end of the inlet 1160 and the outlet 1170 may be exposed externally of the pack cover 1040 through the plurality of holes 1041.

A pipe joint 1180 may be coupled to one end of the inlet 1160 and the outlet 1170 exposed through the hole 1041 of the pack cover 1040. In addition, an external hose may be coupled to the pipe joint 1180. Accordingly, the inlet 1160 and the outlet 1170 may be connected to an external hose through the pipe joint 1180. The pipe joint 1180 may connect the inlet 1160 and the outlet 1170 with an external hose, and serve to seal the same.

In an embodiment of the disclosed technology, the plurality of battery modules 1100 may include an inlet 1160 and an outlet 1170 on one side of the plurality of battery cells 1110 constituting each battery module 1100 in the stacking direction, and the plurality of battery modules 1100 may be accommodated in the pack housing 1010 so that one side thereof including an inlet 1160 and an outlet 1170 is close to each other between battery modules 1100, disposed adjacent to each other.

For example, the battery module 1100 may be disposed so that the inlet 1160 and the outlet 1170 are placed toward a central portion of the pack housing 1010. Referring to the drawing, a plurality of battery modules 1100 may be accommodated in a pack housing 1010 so that an inlet 1160 and an outlet 1170 face a side of the cross beam 1030. However, in another embodiment, the plurality of battery modules 1100 may also be disposed so that the inlet 1160 and the outlet 1170 face a side of the center beam 1020. When the plurality of battery modules 1100 are disposed in this manner, since connection between the plurality of battery modules 1100 and ports is collectively performed in the central portion of the pack housing 1010, a shape of and connection structure of a piping (external hose) may be simplified.

Unlike the above-described embodiment, when the positions of the inlet 1160 and the outlet 1170 provided in each of the battery modules 1100 are changed, an arrangement form of the plurality of battery modules 1100 may also be changed.

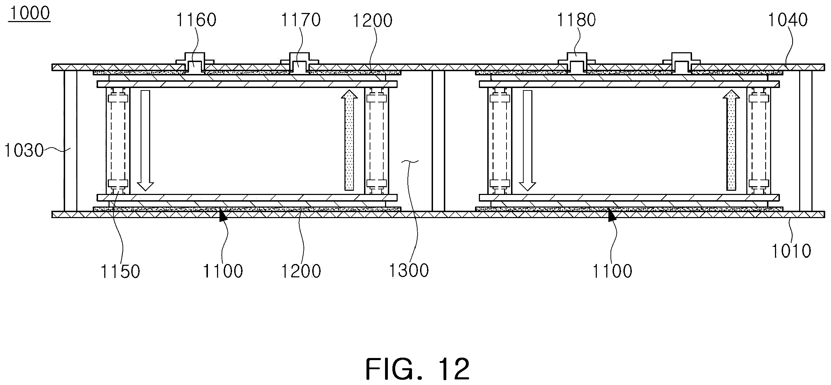

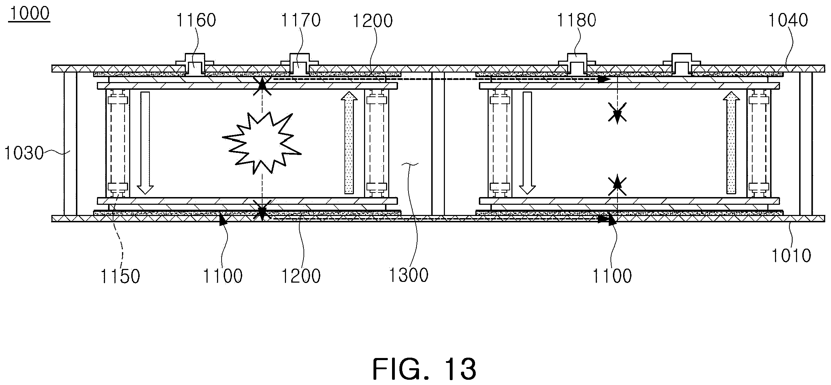

FIG. 12 is a schematic diagram of a battery pack based on another embodiment of the disclosed technology, and FIG. 13 is a conceptual diagram for illustrating a thermal blocking effect of the battery pack of FIG. 12.

As shown in FIG. 12, a battery pack 1000 based on an embodiment of the disclosed technology may further include a heat insulation member 1200 between the battery module 1100 and the battery pack 1000. In an embodiment of the disclosed technology, the heat insulation member 1200 may be disposed between an upper cooling plate 1130 and a pack cover 1040 and between a lower cooling plate 1140 and a pack housing 1010.

In an embodiment of the disclosed technology, the pack housing 1010 and the pack cover 1040, shared by the plurality of battery modules 1100 constituting the battery pack 1000 may be formed of a metal material having high thermal conductivity, for example, an aluminum material, and accordingly, when the pack housing 1010 and the pack cover 1040 directly face the upper cooling plate 1130 and the lower cooling plate 1140 of the battery module 1100, heat transfer to the battery module 1100 disposed adjacent to the pack housing 1010 may be facilitated. Therefore, in another embodiment of the disclosed technology, as shown in FIG. 13, propagation of heat between the battery modules 1100 may be prevented or delayed by additionally disposing the heat insulation member 1200 on a heat transfer path.

The heat insulation member 1200 may be formed of a heat-resistant material, and for example, the heat insulation member 200 may be formed of a material such as mica or ceramic wool. Since these materials do not melt at a temperature at which the battery cell 1110 is ignited, structural collapse of the battery pack 1000 due to occurrence of an event may be prevented.

As described above, since cooling is performed on the plurality of battery cells 110 above and below the battery module 100 based on an embodiment of the disclosed technology, cooling performance and efficiency may be increased. In addition, since cooling is performed independently for each battery module 100 on a side surface of the battery pack 1000, overall cooling performance and efficiency may be improved, and propagation of heat to adjacent battery modules 100 may be minimized. Accordingly, the disclosed technology can be implemented in some implements to provide a thermally stable battery pack 1000.

As set forth above, in an embodiment of the disclosed technology, the disclosed technology can be implemented in some embodiments a battery module and a battery pack including the battery module with improved cooling performance and efficiency.

In addition, the battery pack based on an embodiment of the disclosed technology may prevent or delay propagation of heat to adjacent battery modules.

The disclosed technology can be implemented in rechargeable secondary batteries and modules of rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

## Claims

1. A battery module (100), comprising:
a plurality of battery cells (110) arranged in a row one direction;
an end plate (120) disposed adjacent to an outermost battery cell of the plurality of battery cells; and
an upper cooling plate (130) and a lower cooling plate (140) disposed above and below the plurality of battery cells (110), respectively, and structured to include a first cooling flow path (131) and a second cooling flow path (141), respectively, for a coolant for cooling the plurality of battery cells (110) to flow,
wherein the end plate (120) includes at least one flow path connection portion (150) connected between the upper cooling plate (130) and the lower cooling plate (140) for the coolant to flow between the first cooling flow path (131) and the second cooling flow path (141).

2. The battery module (100) of claim 1, further comprising:
an inlet (160) connected to at least one of the first cooling flow path(131), the second cooling flow path (141), or the at least one flow path connection portion (150) to supply the coolant into the first and second cooling flow paths (131, 141) and the at least one flow path connection portion (150), and an outlet (170) to at least one of the first cooling flow path (131), the second cooling flow path (141), or the at least one flow path connection portion (150) to discharge the coolant from the first and second cooling flow paths (131, 141) and the at least one flow path connection portion (150).

3. The battery module (100) of claim 2, wherein the inlet (160) and the outlet (170) are disposed on at least one of the upper cooling plate (130) or the lower cooling plate (140).

4. The battery module (100) of anyone of claims 1 to 3, wherein the flow path connection portion (150) includes a pair of flow path connection portions (150), disposed to be spaced apart from each other the one direction of the plurality of battery cells (110).

5. The battery module (100) of anyone of claims 2 to 4, wherein the upper cooling plate (130) or the lower cooling plate (140) including the inlet (160) and the outlet (170) comprises a first portion (131a) including a cooling flow path (131) connected to the inlet (160) and a second portion (131b) including a cooling flow path (131) connected to the outlet (170), and
the first portion (131a) and the second portion (131b) are separated and spaced apart from each other on the upper cooling plate (130) or the lower cooling plate (140).

6. The battery module (100) of claim 5, wherein the second portion (131b) is formed to have the same area as the first portion (131a) or to have a greater area than the first portion (131a).

7. The battery module (100) of anyone of claims 2 to 6, wherein one of the first cooling flow path (131) or the second cooling flow path (141) does not include the inlet (160) and the outlet (170), wherein all parts of the one of the first cooling flow path (131) or the second flow path (141) are coupled to each other.

8. The battery module (100) of anyone of claims 4 to 7, wherein the pair of flow path connection portions (150) includes a first flow path connection portion and a second flow path connection portion, wherein the first flow path connection portion is structured to allow the coolant to flow from the upper cooling plate (130) to the lower cooling plate (140), and the second flow path connection portion is structured to allow the coolant to flow from the lower cooling plate (140) to the upper cooling plate (130).

9. The battery module (100) of anyone of claims 1 to 8, further comprising:
a heat dissipation member disposed between the plurality of battery cells (110) and the upper cooling plate (130) and the lower cooling plate (140).

10. The battery module (100) of anyone of claims 1 to 9, wherein the plurality of battery cells (110) includes prismatic battery cells each of which includes electrode terminals on both sides of each of the plurality of battery cells (110).

11. A battery pack (1000), comprising:
the plurality of battery modules (1100) of any one of claims 1 to 10;
a pack housing (1010) structured to accommodate the battery module (1100); and
a pack cover (1040) coupled to the pack housing (1010) to cover the battery module (1100).

12. The battery pack (1000) of claim 11, wherein the inlet (1160) and the outlet (1170) are exposed externally through the pack cover (1040),
wherein the battery pack (1000), further comprises:
a pipe joint (1180) coupled to the inlet (1160) and the outlet (1170) exposed through the pack cover (1040).

13. The battery pack (1000) of claim 11 or 12, wherein the inlet (1160) and the outlet (1170) are arranged on one side of the battery module (1100),
wherein the plurality of battery modules (1100) is accommodated in the pack housing (1010), and the inlet (1160) and the outlet (1170) are disposed close to each other between battery modules (1100).

14. The battery pack (1000) of anyone of claims 11 to 13, wherein a side surface of the battery module (1100) is spaced apart from the pack housing (1010), and an air gap is formed between the battery module (1100) and the pack housing (1010) .

15. The battery pack (1000) of anyone of claims 11 to 14, further comprising:
a heat insulation member disposed on at least one of a space between the battery module (1100) and the pack housing (1010) or a space between the battery module (1100) and the pack cover (1040).
